(19) Europäisches Patentamt
European Patent Office
Office européen des brevets

(11) Publication number: 0 034 877 A2

# (12) EUROPEAN PATENT APPLICATION

(21) Application number: 81300131.0

(22) Date of filing: 13.01.81

(51) Int. Cl.[3]: C 08 L 83/04
C 08 K 5/00, C 08 K 5/41

(30) Priority: 28.01.80 US 115978

(43) Date of publication of application:
02.09.81 Bulletin 81/35

(84) Designated Contracting States:
DE FR GB IT

(71) Applicant: GENERAL ELECTRIC COMPANY
1 River Road
Schenectady New York 12305(US)

(72) Inventor: Smith, Alfred Herbert
7 Meridian Lane
Ballston Lake New York(US)

(74) Representative: Turner, Paul M.
European Patent Attorney 9, Staple Inn
High Holborn, London WC1V 7QH(GB)

## (54) Mildew resistant RTV silicone compositions.

(57) A mildew resistant room temperature vulcanizable silicone composition comprising a silanol end-stopped diorganopolysiloxane polymer with a cross-linking agent, a curing catalyst, and an effective amount of a fungicide of the formula,

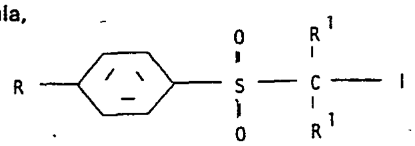

where R is selected from the class consisting of hydrogen, halogen, and alkyl materials of 1 to 4 carbon atoms and $R^1$ is selected from the class consisting of hydrogen, iokine, and alkyl radical of 1 to 4 carbon atoms.

EP 0 034 877 A2

# MILDEW RESISTANT RTV SILICONE COMPOSITIONS

The present invention relates to room temperature vulcanizable rubber compositions and more particularly the present invention relates to room temperature vulcanizable silicone rubber compositions which are mildew resistant.

Room temperature vulcanizable silicone rubber compositions are well known. One type of room temperature vulcanizable silicone rubber composition comprises the reaction product of a silanol end-stopper diorganopolysiloxane polymer in combination with methyl triacetoxy silane disclosed in Bruner, U.S.P. 3,035,016 and Ceyzeriat, U.S.P. 3,133,891. Preferably these compositions have a metal salt of a carboxylic acid as a curing catalyst. The ingredients of the composition are packaged in a substantially anhydrous state and left as such. When it is desired to cure the composition, the package is broken and the composition applied and in the presence of atmospheric moisture the cross-linking agent hydrolizes to cross-link and form a silicone elastomer; total cure taking place in about 24 hours. Such compositions are disclosed with various additives in them such as adhesion promoters, flame retardant additives, oil resistant additives, heat aging additives, and various other types of additives. These compositions are known as one-component room temperature vulcanizable compositions of the acetoxy type.

There is also another type of one component room temperature vulcanizable silicone rubber composition such as that disclosed in U.S.P. 4,100,129, which is hereby incorporated by reference. This patent discloses a composition where the basic ingredients are silanol end-stopped diorganopolysiloxane polymer, a cross-linking agent which is methyltrimethoxysilane and a curing catalyst which is a titanium chelate. Such composition may also contain

plasticizers, adhesion promoters, flame retardant additives, sag control additives and various types of fillers as disclosed in the foregoing patent. This composition is produced in the uncured state by mixing the ingredients then packaging the composition in a substantially anhydrous state. When it is desired to cure the composition, the seal on the package is broken, the composition is applied and when exposed to atmospheric moisture, results in composition curing to a silicone elastomer.

Such a composition may also be produced as a two component system where the cross-linking agent is kept separate from the silanol end-stopped diorganopolysiloxane polymer where the catalyst is a metal salt of a carboxylic acid and where the cross-linking agent may either be methyl trimethoxysilane or an orthosilicate such as tetraethylorthosilicate. In the two component system, it is irrelevent whether moisture is present in either of the two packages and in some case it is preferred that moisture be present so as to increase the cure rate. In such a two package system when it is desired to cure the system, the two packages are mixed and the composition applied which then cures to a silicone elastomer. As can be appreciated, the one-component system is preferred over the two-component system as the two-component system requires additional application steps which increases the cost of utilizing the composition.

Recently there has been developed a new RTV (short for room temperature vulcanizable) system such as that disclosed in Beers, Patent Applicant, Serial No. 70,435 filed August 28, 1979, entitled "Curable Compositions and Processes". This RTV system comprises a silanol end-stopped polymer, methyl tris-(2-ethyl hexanoxy) silane as a cross-linking agent and a metal salt of a carboxylic acid as the catalyst. Such a composition which has good oil resistance and high temperature resistance especially suited for forming silicone gaskets and may have various additives

as disclosed in the foregoing patent application, which is hereby incorporated by reference.

All these different types of room temperature vulcanizable silicone rubber compositions have various properties which make one suited for a particular application over the others. The acetoxy system, while inexpensive to make, may be undesirable because it releases acetic acid while curing which is corrosive and has a somewhat pungent odor. On the other hand, the alkoxy systems are substantially uncorrosive and do not have objectional odors. There are other one component systems which utilize aminoxy silanes as cross-linking agents, ketoxime silanes as cross-linking agents, amide silanes as cross-linking agents, and amine silanes as cross-linking agents. However, these other room temperature vulcanizable silicone rubber compositions which has nitrogen functional silanes as cross-linking agents have not found wide applicability at this point for one reason or another. However, this is not to say that such systems will not find wide applicability and utilization in the future. The one-component systems as well as the two component systems are well-known in the field and are referred to as room-temperature vulcanizable silicone rubber compositions or RTV compositions testifying to the fact they cure or form silicone elastomers upon standing at room temperature and upon exposure to atmospheric moisture and have found wide applicability for various purposes. They can be used to form molds, they are utilized as potting compounds and as encapsulants. But more particularly they have found wide utility as sealants. Such compositions have found wide applicability for use as sealants in bathrooms, in the home or in other buildings. Thus, one such type of composition, and specifically the acetoxy composition, has long been advertised as a bathtub caulk and sealant. However, it was that there was one disadvantage in such RTV sealants when they were utilized in bathrooms, and specifically near the bathtub,

or shower, or other places where moisture was prevalent and that was that fungi would grow on the sealant. Accordingly, since silicone elastomers naturally allow the growth of fungus, the growth of fungus would prevade and the silicone sealant in the cured state would become unsightly. Accordingly, it became evident that there had to be utilized a fungicide in such RTV silicone sealants so as to prevent the growth of fungus on such sealants especially when such sealants were to be utilized in the bathroom. An example of a fungicide that was early utilized with acetoxy one-component RTV sealants was 10,10'-Oxybisphenoxarsine. While this fungicide was a very effective fungicide and prevented the growth of fungus on RTV sealants, it had the disadvantage that it turned yellow after a time when the sealant was exposed to ultraviolet light, such as sunlight. Accordingly, it was desired to find a more suitable fungicide for RTV sealants which would make the sealant in the cured state mildew resistant. In such a search for various types of fungicides, there were tested some of the fungicides disclosed in the article entitled, "Non-Mercurial Fungicides" by Post, et al., found on pages 31 through 38 of the September, 1976 issue of Modern Paint and Coatings which is hereby incorporated by reference. In addition to these fungicides, many other fungicides were looked at. However, with the exception of the compounds disclosed below, such fungicides were looked at. However, with the exception of the compounds disclosed below, such fungicides do not perform properly. Accordingly, most fungicides when they were tested would degrade the shelf life of the composition, that is, the uncured composition after it has been heated at 50$^{\circ}$C for three months, which was equivalent to storage for 2 years at room temperature, would cure in a very soft state or not cure at all and the physical properties of the compositions that cured would be very poor.

In another aspect, some fungicides cause the adhesion or self-bonding properties of the RTV sealant to suffer. Accordingly,

it was highly unexpected among the many fungicides that were tried that the fungicides disclosed below would function very effectively as a mildew resistant additive which would prevent the composition from growing fungus and which would not effect the curing properties of the uncured composition and the physical properties of cured composition.

In accordance with the above, there is provided by the present invention a mildew resistant room temperature vulcanizable silicone rubber composition comprising (A) 100 parts by weight of a silanol end-stopped diorganopolysiloxane of a viscosity varying from 100 to 500,000 centipoise at 25°C where the organo group is a monovalent hydrocarbon radical; (B) from 0.01 to 15 parts by weight of a cross-linking agent; (C) from 0.01 to 10 parts by weight of a curing catalyst; and (D) an effective amount of a fungicide of the formula,

(1) 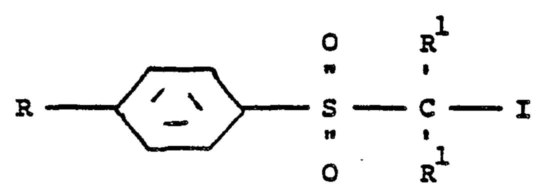

where R is selected from the class consisting of hydrogen, halogen, and alkyl materials of 1 to 4 carbon atoms and $R^1$ is selected from the class consisting of hydrogen, iodine, and alkyl radicals of 1 to 4 carbon atoms. Preferably there is utilized from 0.01 to 2 parts by weight of a fungicide where the fungicide is an organoc sulfone compound. While this fungicide may be utilized both with one component room temperature vulcanizable silicone rubber compositions wherein the cross-linking agent either an acetoxy functional silane or an alkoxy functional silane, or 2-ethyl hexanoxy functional silane.

There must be present in the composition an effective amount of the fungicide of Formula (1). In the formula, R is selected from the class consisting of hydrogen and any monovalent hydrocarbon radical and also halogen. Most preferably R is selected from the class consisting of hydrogen, halogen and alkyl radicals of 1 to 4 carbon atoms, such as methyl ethyl propyl, butyl. With respect to the halogen groups, preferably the halogen is either chlorine, bromine or iodine and more preferably chlorine. In the most preferred embodiment, R is selected from the hydrogen, chlorine and methyl groups. In the same respect $R^1$ can be selected from the class consisting of hydrogen, iodine, and alkyl radicals of 1 to 4 carbon atoms such as methyl, ethyl, propyl, and butyl. Most preferably, $R^1$ is selected from the class consisting of hydrogen, iodine, and alkyl radicals of from 1 to 4 carbon atoms. Most preferably $R^1$ is selected from the class consisting of hydrogen and iodine radicals. There are two preferred fungicides within the scope of Formula (1). First preferably the fungicide within the scope of Formula (1) has the formula,

(2) 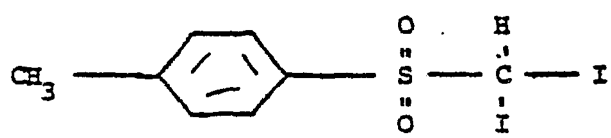

Diiodomethyl-p-tolyl sulfone is the most preferred compound within the scope of the present invention.

A less preferred but still desirable compound within the scope of the present invention is a fungicide having the formula,

(3) 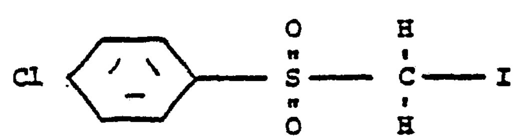

The above two compounds are the most preferred compounds within the scope of the present invention, however, as pointed out

previously, any compound within the scope of Formula (1) will be suitable as a fungicide in the composition of the instant case, the most preferable compound being the compounds of Formulas (2) and (3).

These compounds are well known compounds which are available from Abbott Laboratories, Inc. of Chicago, Illinois. One preferred process for making such fungicides is disclosed in U.S.P. 3,657,353 which is hereby incorporated by reference. This is not the only method for making the compounds in the instant case. There are other processes for producing such compounds. It should be noted that in the compositions of the instant case there only need be an effective amount of the fungicide in order for the composition to be mildew resistant. The effective amount varies somewhat from composition to composition. More specifically, it is preferred that there be present from 0.001 to 2 parts by weight of fungicides per hundreds by weight of a base silanol end-stopped polymer in the RTV composition. Most preferably, there may be utilized anywhere from .05 to 0.6 parts per 100 parts of the base silanol polymer of the fungicide in accordance with the instant invention. It should be noted that on the upper limit there is no limitation except the additional amounts of fungicide do not serve any useful purpose and increase the cost of the composition. Further, in some cases an increase in the amount of fungicide over the above two part limit may effect the shelf life of the composition.

Such fungicides are sold by Abbott Laboratories, Inc., Chicago, Illinois, under the tradename of Amical. Preferably when such fungicides are added to RTV compositions, they are added to form a dispersion of the fungicide in butylated hydroxy toluene. The butylated hydroxy toluene acts as a color stabilizer for the fungicide. It has been noted that without such a color stabilizer, in some cases the fungicide will cause the composition

to turn yellow upon being heat aged at 50°C for 3 months which is equivalent to a shelf storage period of 2 years at room temperature. Preferably, the dispersion is anywhere from 5 to 95% by weight concentration of the fungicide in 95 to 5% by weight of the butylated hydroxy toluene color stabilizer.

The fungicide of the instant case may be utilized with any room temperature vulcanizable silicone rubber composition. In such condensation curing room temperature vulcanizable silicone rubber compositions, the base polymer is the silanol end-stopped diorganopolysiloxane polymer having a viscosity varying from 100 to 500,000 centipoise at 25°C with the organo group as selected from any monovalent hydrocarbon radical. More preferably, such a compound has the formula,

(4) 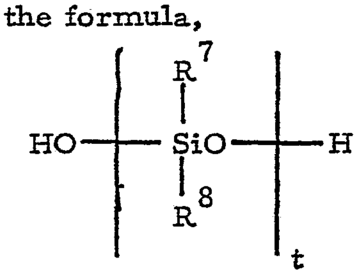

where $R^7$ and $R^8$ are selected from monovalent hydrocarbon radicals and t is such that the viscosity of the polymer varies from 100 to 500,000 centipoise at 25°C and more preferably varies from 100 to 200,000 centipoise at 25°C. The radicals $R^7$ and $R^8$ are independently selected from monovalent hydrocarbon radicals and may be selected from alkyl radicals of 1 to 8 carbon atoms such as methyl, ethyl, etc., cyclo alkyl radicals such as cyclohexyl, cycloheptyl, etc.; mononuclear aryl radicals such as phenyl, methylphenyl, etc.; alkenyl radicals selected from the class of vinyl, allyl, etc.; and fluoro alkyl radicals such as 3,3,3-trifluoropropyl. Most preferably, $R^7$ and $R^8$ as well as the organic group in the definition of the diorganopolysiloxane polymer are selected from the alkyl radicals, phenyl radicals, vinyl radicals, and fluoroalkyl radicals.

In one type of RTV composition per 100 parts by weight of the silanol end-stopped diorganopolysiloxane base polymer, there is utilized from 0.01 to 15 parts by weight of a cross-linking agent and from 0.01 to 10 parts by weight of a curing catalyst. The type of cross-linking agent will vary depending on the type of composition it is. Accordingly, in certain types of composition, the cross-linking agent has the formula,

(5) $R^2 Si (O C O R^3)_3$

where $R^2$ is an alkyl radicals of 1 to 8 carbon atoms and $R^3$ is a monovalent hydrocarbon. In one type of common RTV composition, the compound within the scope of the formula is methyl triacetoxy silane. Triacetoxy silane is the cross-linking agent. Preferably, there is utilized as a curing catalyst a metal salt of a carboxylic acid with a metal varying from lead to magnesium in the Periodic Table. Most preferably, the metal salt is a tin salt of a carboxylic acid such as a dibutyl tin dilaurate. However, for more information as to such compounds, one is referred to the patent literature for the different types of curing catalyst that may be utilized with methyl triacetoxysilane as the cross-linking agent. In such a composition per 100 parts by weight of the silanol base polymer there may be utilized from 5 to 200 parts by weight of a filler. The filler may be selected from reinforcing or extending fillers. Examples of reinforcing fillers are fumed silica and precipitated silica which can be treated or untreated but are preferably treated with cyclopolysiloxane polymers silazanes and the like. Extending fillers are titanium dioxide, lithopane, zinc oxide, zirconium silicate, silica aerogel, iron oxide, diatmaceous earth, calcium carbonate, glass fibers, magnesium oxide, chormic oxide, zirconium oxide, aluminum oxide, crushed quartz, calcined clay, asbestos, carbon, graphite, cork, cotton, synthetic fibers, and so forth. Silicone or silazane treated fillers such as those described in Luca U.S.P. 2,938,009, Lichtenwalner

U.S.P. 3,004,859 and Smith U.S.P. 3,635,743 are particularly suitable for use in the RTV composition of the present invention. These are generally employed in amounts from about 5 to about 200 parts and preferably from about 10 to 100 parts by weight per 100 parts of a silanol chain stopped diorganopolysiloxane polymer. The only limitation on the use of such fillers is the viscosity limitation on the uncured composition that it is necessary to meet. In particular, reinforcing fillers such as fumed silica and precipitated silica even though treated will increase the viscosity of the uncured composition considerably if high loadings of such filler is used. In such compositions, there may be utilized other additives such as adhesion promoters, flame retardant additives, and so on which are evident in the RTV silicone patent art. Such additives may be present in the composition of the present case as long as it does not interfere with fungicidal activity. It should be noted that in such acetoxy curing RTV composition, it has not been found the fungicide activity is not effected by any of the traditional additives.

In the cross-linking agents of Formula (5), $R^3$ may also be an alkyl radical of 6 to 30 carbon atoms. Specifically novel compositions have recently been discovered in which the cross-linking agent is methyl-tris-(2-ethyl, hexanoxy) silane as disclosed in the patent application of M.D. Beers, Serial No. 70,435, filed on August 28, 1979 which is hereby incorporated by reference. It has been found that these compositions are not as corrosive as the acetoxy curing composition and also do not give off pungent odors. A curing catalyst with such a composition or cross-linking agent and again with a silanol base polymer is preferably a tin salt of carboxylic acid in which two preferred embodiments is dibutyl tin dioxide and dimethyl tin dineodecanoate as disclosed in the foregoing Serial No. 70,435. A desirable ingredient in this composition per 100 parts by weight a base polymer is from 2 to 20 parts of a fluid

polysiloxane containing a high degree trifunctionality, tetrafunctionality, or a mixture of tri and tetrafunctionality and comprising:

(i) from 25 to 60 mole percent of monoalkyl siloxy units, siloxy units or a mixture of such units;

(ii) from 1 to 6 mole percent of trialkylsiloxy units; and

(iii) from 37 to 74 mole percent of dialkylsiloxy units, said polysiloxane containing from about 0.1 to 2 by weight of silicone-bonded hydroxyl groups.

These compositions have high temperature stability and oil resistance; and are admirably suited for making silicone rubber gasketing. In the composition there is preferably utilized from 5 to 30 parts by weight of silica fillers such as fumed silica and precipitated silica, and from 5 to 170 parts by weight of extending filler. There is preferably used from 5 to 170 parts by weight such as reinforcing filler such as calcium carbonate. Too much of the reinforcing filler is not utilized since the composition would have unduly increasing viscosity in the uncured state. It should be noted that the fumed silica is utilized in the composition to some extent as a sag control additive rather than as a reinforcing additive. In addition, as a sag control additive that may be added from 0.03 to 2 parts by weight of a polyether as a surfactant per 100 parts by weight of a silanol end-stopped polymer. For more fuller disclosure as to the use of such polyether sag control additives one is referred to the disclosure of Wright et al Serial No. 34,212 entitled "Room Temperature Vulcanizable Silicone Rubber Compositions with Sag Control" filed on April 30, 1979. The disclosure of this patent application is hereby incorporated by reference. With such compositions as well as the acetoxy composition, there may be utilized anywhere from 0.1 to 3 parts by weight of an adhesion promoter selected from the class consisting of silyl maleates, silyl fumerates, and silyl succinates. The formula of the particular embodiment of such materials will not be disclosed herein since they are the subject of Smith et al Patent Application, Serial No. 16,254 filed on February 28, 1979 entitled "Self-Bonding Room Temperature

Vulcanizable Silicone Rubber Compositions". This patent application is hereby incorporated by reference. As disclosed in that patent application there can be utilized as a self-bonding additive per 100 parts of a base silanol polymer from 0.1 to 3 parts by weight of a self-bonding additive selected from the group consisting of:

$$\begin{array}{l} R^6 - C - Z - R - Si\ R^3_n\ (M)_{3-n} \\ \quad\ \ \| \\ R^6 - C - Z - G \end{array}$$

$$\begin{array}{l} R^6 - C - Z - Si\ R^2_n\ (M)_{3-n} \\ G - Z - C - R^6, \text{ and} \end{array}$$

$$\begin{array}{l} R^6\ CH - Z - R - Si\ R^3_n\ (M)_{3-n} \\ R^6\ \overset{|}{C}H - Z - G \end{array}$$

where Z is selected from $\overset{O}{\underset{C-O}{\|}}$, phenylene, $\overset{O}{\underset{C}{\|}}$, COHN and $CONR^2_2$ G is selected from the class consisting of hydrogen, $R'$, $R^4\ SiR^2_n(M)_{3-n}$ where R' is selected from monovalent hydrocarbon radicals and halogenated monovalent hydrocarbon radicals and halogenated monovalent hydrocarbon radicals, M is selected from $R^3O$ and $R^3\ \overset{O}{\overset{\|}{C}}-O-$ radicals $R^3$ is selected from monovalent hydrocarbon radicals and halogenated monovalent hydrocarbon radicals, $R^6$ is selected from hydrogen, and alkyl radicals of up to 10 carbon atoms and n is a whole number that varies from 1 to 3, and self-bonding polysiloxane additives selected from the group consisting of the formulas,

$$\left( \begin{array}{l} R^6 - C - Z - R \\ \quad\ \ \| \\ R^6 - C - Z - G' \end{array} \right)_a \!\!\! -\!\!-\!\!-\; R^2_b\ SiO_{\frac{4-a-b'}{2}}$$

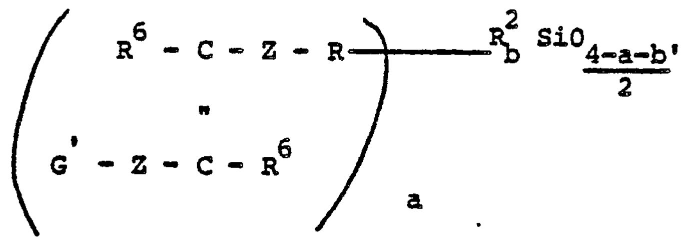

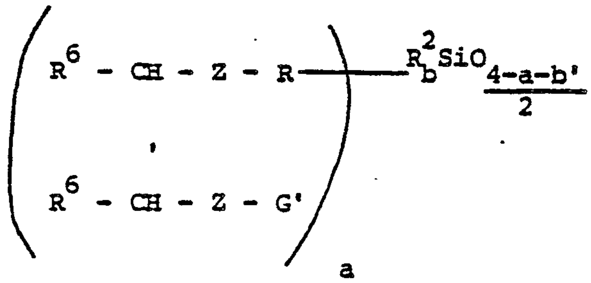

where G is selected from the class consisting of hydrogen, R' and $R^4 H_c R^2_d \ SiO_{(3-c-d/2)}$ and where Z, R', $R^4$, $R^2$ and R are as previously defined, a varies from 0.005 to 2.0, b' varies from 1.0 to 2.5, the sum of a+b varies from 1.005 to 3.0, caries from 0 to 1.0, d varies from 1.0 to 2.5 and the sum of c+d caries from 1.0 to 2.0.

There may be utilized other additives in such compositions such as iron oxide, various plastizers. It should be noted that none of these additives affect the fungicidal activity of the fungicides or that the fungicide of the instant case be utilized in such compositions to produce an effective mildew resistant RTV sealant. In another aspect and in another preferred embodiment within the scope of the instant case, the cross-linking agent can be alkyl trialkoxysilane and the curing catalyst can be a titanium chelate. Preferably, the alkyl trialkoxy silane is methyl trimethoxy silene and the titanium chelate catalyst is one of those disclosed in Beers U.S.P. 4,100,129 which is hereby incorporated by reference.

Especially important are partially chelated organometalic esters and particularly titanium compounds of the formula:

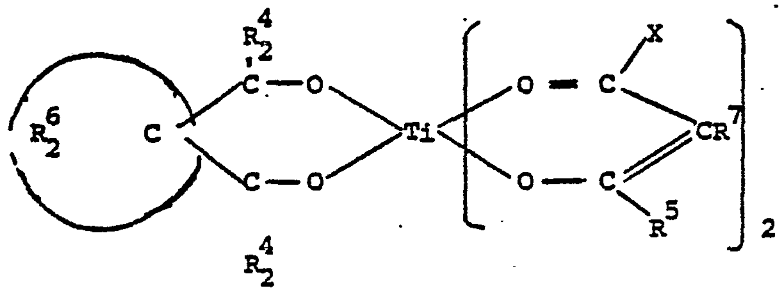

or

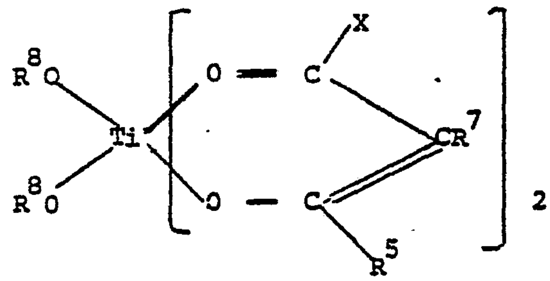

wherein $R^4$ is hydrogen, or an organic radical of up to 8 carbon atoms selected from hydrocarbyl, halohydrocarbyl, or carboxyakyl; $R^5$ is a radical of up to 8 carbon atoms selected from hydrocarbyl, halohydrocarbyl and cyan-lower alkyl; $R^6$ is selected from same group as $R^4$ and in addition, from halo, cyano, nitro, carboxy ester, or acyl and hydrocarbyl substituted by halo, cyano, nitro, carboxy ester and acyl, the total number of carbon atoms in the $R^4$ and in the $R^6$ substituted alkanedioxy radical being not more than about 18; $R^7$ is selected from hydrogen or an organic radical of up to 8 carbon atoms selected from hydrocarbyl, halohydrocarbyl, or acyl and, when taken together with $R^5$ forms together with the carbon atoms to wich they are attached a cyclic hydrocarbon substituent of up to about 12 carbon atoms or such a substituent substituted with one or more of a chloro, nitro, acyl, cyano or carboxy ester substituents; X is a radical of up to 20 carbon atoms selected from hydrocarbyl, halohydrocarbyl, cyanoalkyl, alkoxy, haloalkoxy, cyanoalkoxy, amino or ether and polyether groups of the formula $-(C_qH_{2q}O)_vR$ where q is from 2 to 4, v is from 1 to 20 and R is as defined above, a is 0 or an integer of up to 8 and, when a is 0, the $C-R^4_2$ groups are bonded to each other in a cyclic fashion, and $R^8$ is a radical of up to 8 carbon atoms selected from hydrocarbyl, halohydrocarbyl or cyano-lower alkyl. In the

composition preferably there is utilized either extending or reinforcing fillers, but most preferably there is utilized from 5 to 20 parts by weight of a reinforcing silica filler and from 5 to 180 parts by weight of an extending filler such as calcium carbonate. Accordingly, in such an alkoxy curing composition there may be plasticizers such as from 1 to 50 parts by weight of a plasticizer which is a trioganosilyl end-stopped diorganopolysiloxane of a viscosity varying from 10 to 10,000 centipoise at 25°C and where the organo group is a monovalent hydrocarbon radical and preferably selected from alkyl radicals, mononuclear aryl radicals, alkenyl radicals, cyclo alkyl radicals, and fluoroalkyl radicals. More preferably the organo group in such plasticizers is an alkyl radical of 1 to 8 carbon atoms, such as methyl or phenyl, more preferably being methyl. Most preferably the plasticizer has a viscosity varying from 10 to 1,000 centipoise is dimethylpolysiloxane which is trimethylsiloxy end-stopped. Such alkoxy curing RTV compositions may be an adhesion promoter generally from 0.2 to 2 parts by weight of an adhesion promoter of nitrogen containing compounds such as acetonitrile. The preferred adhesion promoters for the alkoxy curing one-part systems have the formula,

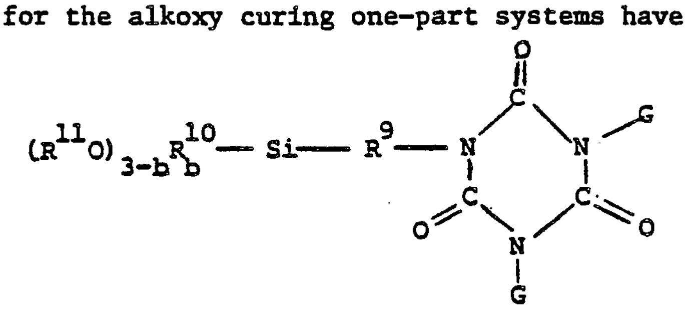

wherein G is the same as $R^{10}$, hereinafter defined, a $(R^{11}O)_{3-b}—R_b^{10}—Si\ R^9$ radical, styryl, vinyl, allyl, chloroallyl or cyclohexenyl; $R^9$ is a divalent radical selected from alkylenearylene, alkylene, cycloalkenyl and halosubstituted such divalent radicals; $R^{10}$ is a radical of up to 8 carbon atoms selected from from hydrocarbyl or halohydrocarbyl and $R^{11}$ is a radical of the type defined for $R^{10}$ and also cyano lower alkyl; and b is 0 to 3.

Such adhesion promoters are disclosed in the copending application of Berger Serial No. 301,637, filed October 17, 1972, now abandoned,which is incorporated herein by reference. The most preferred such promoters are 1,3,5,-tris-trimethoxysilylpropyliso-cyanate and bis-1,3-trimethoxysilylpropylisocyanurate.

In addition to fillers and adhesion promoters, the present compositions can also include a thixotrope or viscosity depressant in the form of from 0.3 to 20 parts by weight of a low molecular weight linear polydiorganosiloxane. A preferred class of such viscosity depressants is those of the formula:

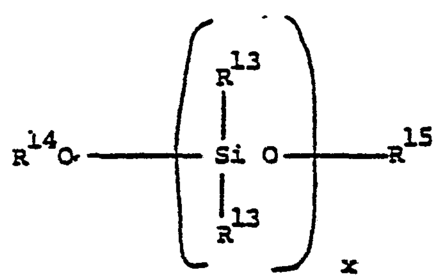

wherein $R^{12}$ and $R^{13}$ are each organic radicals of up to 8 carbon atoms selected from hydrocarbyl, halohydrocarbyl and cyano lower alkyl, $R^{14}$ and $R^{15}$ are, independently, hydrogen or radicals as defined for $R^{12}$ and $R^{13}$, and x has a value of from 2 to 46.

The most preferred such thixotropes are those of the above formula wherein, in the viscosity depressant, $R^{14}$ and $R^{15}$ are methyl, $R^{12}$ and $R^{13}$ are methyl or methyl and phenyl in a ratio of about 70:30, and x is an integer of from 3 to 50.

There may also be included in such compositions additional conventional ingredients as flame retardant stabilizing agents, pigments, reinforcing agents as with the case with the prior art RTV compositions. As long as the additive does not effect the mildew resistant activity of the fungicide it can be utilized in

the composition of the instant case. It has been found that most traditional additives that have been tested in such compositions have not affected the mildew resistant activity of the fungicides of the instant case. The compositions of the instant case have been disclosed as fungicides in the above for one component RTV compositions. However, they can be utilized if desired as fungicides for two component RTV compositions comprise a base silanol end-stopped polymer as disclosed above for the one-component systems and an alkyl silicate as a cross-linking agent, such as, ortho silicates such as tetra, ethyl orthosilicate and a partial hydrolysis product of such silicate. The curing catalysts with such alkyl silicates are usually utilized in the concentration of 0.01 to 10 parts by weight per 100 of a silanol based polymer and the metal salt of a carboxlic acid such as preferably a tin salt of a carboxylic acid. One type of such catalyst that is preferred for such compositions is, for instance, dibutyl tin dilaurate. This composition has various additives in them, such as, self-bonding promoters, deep section cure additives, such as, water and various other types of additives. An example of such composition is to be found in Lampe and Bessemer, U.S.P. 3,888,815 which is hereby incorporated by reference. It should be noted that normally two component systems are not utilized in applications where it is necessary that it be mildew resistant but if it was necessary it may be made mildew resistant. Accordingly, the mildew resistant fungicide of the instant case may be utilized to render compositions mildew resistant in the concentrations disclosed above, that is, compositions other than the above one-component systems. Accordingly, the fungicide of the instant case can be utilized to render mildew resistant one-component RTV systems in which the cross-linking agent is other than the cross-linking agents disclosed above such as, for instance, nitrogen functional cross-linking agents. One component RTV systems utilizing a nitrogen functional silane as cross-linking agent are ketoxime, and aminoxy systems, which are, for instance, disclosed in the foregoing patents which are incorporated by reference.

| | | |
|---|---|---|
| U.S.P. 3,189,576 | U.S.P. 3,441,583 | U.S.P. 3,926,160 |
| U.S.P. 3,817,909 | U.S.P. 3,189,576 | U.S.P. 3,329,529 |
| U.S.P. 3,398,112 | U.S.P. 3,926,160 | U.S.P. 3,184,427 |
| U.S.P. 3,471,434 | U.S.P. 3,576,905 | U.S.P. 3,609,178 |
| U.S.P. 3,674,738 | U.S.P. 3,678,003 | U.S.P. 3,697,568 |
| U.S.P. 3,734,881 | U.S.P. 3,742,004 | U.S.P. 3,758,441 |
| U.S.P 2,876,234 | U.S.P 3,364,160 | U.S.P. 3,378,520 |
| U.S.P. 3,417,047 | U.S.P. 3,488,371 | U.S.P. 3,776,127 |
| U.S.P. 3,766,128 | U.S.P. 3,766,934 | U.S.P. 3,996,184 |
| U.S.P. 3,776,933 | U.S.P. 4,020,044 | |

Accordingly, it is not the intent of the inventor of the instant case to limit the use of this fungicide with systems having only the cross-linking agents disclosed above. The fungicide may be utilized as a fungicide to render one component systems mildew resistant where the cross-linking agent is other than the cross-linking agents disclosed above.

The composition is prepared by first dispersing or mixing the fungicide of the instant case in the butylated hydroxy toluene and then making a master batch of such dispersion with a portion of the silanol base polymer and preferably with some fillers as to give the composition consistancy. When the composition is prepared, the base silanol and polymer with a filler in it such as a base composition is mixed with fungicide dispersion or a portion of the master batch of fungicide dispersion and when the catalyst and other ingredients are added the mixing is carried out in a substantially anhydrous state so when the final mixture is obtained, a one-component RTV system in a substantially anhydrous state. When it is desired to apply the composition, the seal of the package is broken, the composition is applied, and the composition will cure to a silicone elastomer upon the hydroylsis of the cross-linking agent by atmospheric moisture. Cure to a tack-free state is obtained in about

10 to 30 minutes in such composition normally and the final cure takes place in about 1 to 3 days.

The two component composition is prepared in the same way that is to obtain a master batch of the silanol polymer, filler and the fungicide with a color stabilizer and then this master batch is added to a base silanol polymer as a single component which is packaged separately from the catalyst component when it is desired to cure the composition, the two components are mixed and applied whereupon the mixture will cure to a silicone elastomer. With respect to the one component system, irrespective of how the fungicide is added to the composition, it should be noted that it is preferably first dispersed in the color stabilizer before it is added to the composition and that the one-component composition be packaged in a substantially anhydrous state. The addition of the ingredients is not normally critical in the formulation of such compositions.

The examples below are given for the purposed of illustrating the present invention and are not give for any purpose of setting limits and boundaries to the instant invention. All parts in the examples are by weight.

Example 1

There is prepared a base formulation comprising 1100 parts by weight of a silanol end-stopped dimethylpolysiloxane polymer of 4200 centipoise, viscosity at 25°C. To this was mixed 2200 parts by weight of fumed silica treated with octomethyl cyclo tetrasiloxane. To this it was added 154 parts by weight of M/D/T oh silicone oil containing approximately 5 mole percent trimethyl siloxy units, 20 mole percent monomethylsiloxy units. 75 mole percent of dimethyl diloxy units and approximately 0.5 weight percent of hydroxy units. This above base composition, after it was mixed, was then dried for 1 hour at 100°C at 6 millimeter vaccums to remove water. Then there

was prepared a dispersion by adding 10 parts of the fungicide to 185 parts silanol end-stopped dimethyl polysiloxane polymer of 600 centipoise viscosity at 25°C, and then was added 5 parts of the octamethyl cyclotetrasiloxane treated fumed silica and 10 parts by weight of diiodomethyl-p-tolyl sulfone. The mixture was mixed on a high speed Eppenbach mixer for 30 minutes to achieve the actual dispersion. There was added 25 parts of the sulfone dispersion to 600 parts of the base composition, this mixture of ingredients were catalyzed at 24.5 parts of a catalyst mixture consisting of 79.1% of methyl triacetoxy silane, 19.8% of ditertiary butoxy diacetoxy silane, and 1.1% of dibutyltinidiacetate. The mixture was catalyzed at 100 strokes on a Semco catalyzer. Samples of catalyzed sealant were tested at GE Electronics Lab, Electronics Park for fungicadal activity. The sealant showed excellent fungus resistance to Aspergillus niger, Aspergillus flavus, Aspergillus teneus, Myrotecium verrucaria and Memmiella eschinata.

Example 2

There was prepared a base composition comprising 600 parts of a silanol terminated dimethylpolysiloxane polymer of 105,000 centipoise viscosity at 25°C, to which was added 30 parts by weight of fumed silica treated with octoamethyl cyclo tetrasiloxane, 720 parts of stearic acid treated calcium carbonate, 230 parts of a trimethylsiloxy end-stopped dimethyl polysiloxane fluid at 100 centipoise viscosity at 25°C, 36 parts of titanium oxide and 11.8 parts of the sulfone fungicidal dispersion of Example 1. The base was co-mixed at room temperature with 6 mm vacuum on a change can mixer for 6 hours to acheive maximum dispersion. One thousand parts of the base was catalyzed by 100 strokes in a pressure Semco catalyzer with a mixture comprising 8.0 parts of 1,3-propane dioxytitanium bis(acetyl acetonate), 15.0 parts of methyltrimethoxysilane and 7.5 parts of 1,3,5 tris (Trimethoxy silyl propyl) iscocyanurate. This composition was then tested for fungicidal activity and showed excellent resistance to the mixed fungicide culture described in Example 1.

Example 3

There was mixed 1000 parts of a silanol end-stopped dimethyl polysiloxane polymer of 3100 centipoise viscosity of 25°C. To this there was added 2.0 parts of ethylene oxide/propylene oxide polyether surfactant as a sag control additive. To this there was added 100 parts by weight 45 centipoise viscosity at 25°C silanol terminated polydimethyl siloxane M/D/T silicone oil containing approximately 5 mole percent trimethylsiloxy, 20 mole percent monomethylsiloxy, 75 mole percent dimethyl siloxy units and approximately 0.5 weight percent hydroxy content. To this mixture there was added 500parts of stearic acid treated calcium carbonate, 200 parts of octamethyl cyclotetrasiloxane treated fumed silica and 40 parts of a masterbatch containing 90 percent by weight of titanium oxide and 10 percent by weight of a dispersion of diiodmethyl-p-toyl sulfone which was dispersed with butylated hydroxy toluene as a color stabilizer (there was 80 percent by weight of the sulfone per 20 percent of butylated hydroxy toluene). 1400 parts of the base mixture of above was catalysed with 100 strokes on a Semco catalyzer with 104 parts of a mixture comprising 70.89 parts of methyl tris (2-ethyl-hexanoxy) silane, 31.52 parts of bis(tri-methoxysilylpropyl) fumerate, and 1.58 parts of dimethyl tin dineodecanoate. Again, the fungicial activity of the cured composition to the fungus culture of Example 1 was excellent.

Example 4

There was mixed 1000 parts of a silanol end-stopped dimethyl polysiloxane polymer of 13,000 centipoise visocisty at 25°C. To this there was added 2.0 parts of ethylene oxide/propylene oxide polyether surfactant as a sag control additive. To this there was added 100 parts by weight 45 centipoise viscosity at 25°C of a silanol terminated polydimethyl siloxane M/D/T silicone oil containing approximately 5 mole percent trimethylsiloxy, 20 mole percent monomethylsiloxy, 75 mole percent dimethyl siloxy units and

approximately 0.5 weight percent hydroxy content, 200 parts of a trimethylsiloxy end stopped dimethyl polysiloxane fluid of 100 centipoise viscosity at 25°C, 200 parts of octomethyl cyclotetrasiloxane treated fumed silica and 40 parts of a masterbatch containing 90 percent by weight of titanium oxide and 10 percent by weight of a dispersion of diiolomethyl-p-tolyl sulfone which was dispersed with butylated hydroxy toluene as a color stabilizer to which there was 80 percent by weight of the sulfone per 20 percent of butylated hydroxy toluene in a color stabilizer. 1400 parts of the base mixture of above was catalyzed with 100 strokes on a Semco catalyzer with 104 parts of a mixture comprising 70.89 parts of methyl tris (2-ethyl-hexanoxy) silane, 31.52 parts of bis(tri-methoxysilylpropyl) fumerate, and 1.58 parts of dimethyl tin dineodecanoate. Again, the fungicidal activity of the cured composition to the fungus culture of Example 1 was excellent.

## Example 5

There was mixed 1000 parts of a silanol end-stopped dimethyl polysiloxane polymer of 4100 centipoise viscosity at 25°C. To this there was added 2.0 parts of ehtylene oxide/propylene oxide polyether surfactant as a sag control additive. To this there was added 100 parts by weight of a 45 centipoise viscosity at 25°C silanol terminated polydimethyl siloxane M/D/T silicone oil containing approximately 5 mole percent trimethylsiloxy, 20 mole percent monomethylsiloxy, 75 mole percent dimethyl siloxy units and approximately 0.5 weight percent hydroxy content. To this mixture there was added 500 parts of stearic acid treated calcium carbonate, 200 parts of octomethyl cyclotetrasiloxane treated fumed silica and 40 parts of a masterbatch containing 90 percent by weight of titanium oxide and 10 percent by weight of a dispersion of diiodomethyl-p-tolyl sulfone which was dispersed with butylated hydroxy toluene as a color stabilizer to which there was 80 percent by weight of the sulfone per 20 percent of butylated hydroxy toluene in a color stabilizer. 1000 parts of the base mixture of above was catalyzed

with 100 strokes on a Senco catalyzer with 60 parts of acetoxy ethyltris (methyl ethyl imino-oxy) silane and .66 parts of dibutyltindilaurate. Again the fungicidal activity to the fungus culture described in Example 1 was excellent.

CLAIMS

1. A mildew resistant room temperature vulcanizable silicone composition comprising (A) 100 parts by weight of a silanol end stopped diorganopolysiloxane of a viscosity varying from 100 to 500,000 centipoise at 25°C where the organo group is a monovalent hydrocarbon radical; (B) from 0.01 to 15 parts by weight of a cross-linking agent; (C) from 0.01 to 10 parts by weight of a curing catalyst; and (D) an effective amount of a fungicide of the formula,

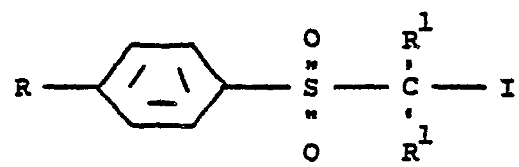

where R is selected from the class consisting of hydrogen, halogen, and alkyl materials of 1 to 4 carbon atoms and $R^1$ is selected from the class consisting of hydrogen, iodine, and alkyl radicals of 1 to 4 carbon atoms.

2. The composition of Claim 1 wherein there is present from 0.001 to 2 parts by weight of the fungicide.

3. The composition of Claim 2 wherein the fungicide has the formula,

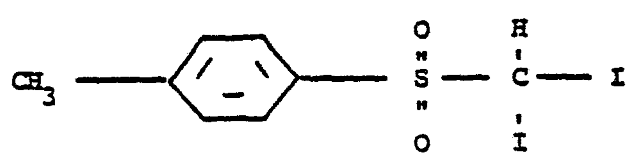

4. The composition of Claim 2 wherein the fungicide has the formula,

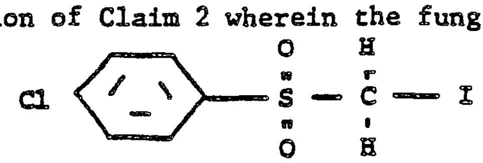

5. The composition of Claim 2 wherein the fungicide is added to the composition as a dispersion of the fungicide in butylated hydroxy toluene.

6. The composition of Claim 2 wherein the cross-linking agent has the formula,

$$R^2 \quad Si \quad (O\ C^{O}\ R^3)_3$$

where $R^2$ is an alkyl radical of 1 to 8 carbon atoms and $R^3$ is an alkyl radical of 1 to 30 carbon atoms.

7. The composition of Claim 6 wherein the curing catalyst is a metal salt of a carboxylic acid with the metal varying from lead to maganese in the Periodic Table.

8. The composition of Claim 7 wherein there is present from 5 to 200 parts by weight of a filler.

9. The composition of Claim 8 wherein the cross-linking agent is methyltriacetoxy silane and the curing catalyst is a tin salt of a carboxylic acid.

10. The composition of Claim 8 wherein the cross-linking agent is methyl-tris-(2-ethyl-hexanoxysilane).

11. The composition of Claim 10 wherein the curing catalyst is dibutyl tin oxide.

12. The composition of Claim 10 wherein the curing catalyst is dimethyl tin dineodecanoate.

13. The composition of Claim 10 having further from 2 to 20 parts by weight of a fluid polysiloxane containing a high degree of trifunctionality, tetra functionality, on a mixture of tri- and tetrafunctionality and comprising:

(i) from 25 to 60 mole percent of monolkyl siloxy units, siloxy units or a mixture of such units;

(ii) from 1 to 6 mole percent of trialkylsiloxy units; and

(iii) from 37 to 74 mole percent of dialkylsiloxy units, said polysiloxane containing from about 0.1 to 2 to be weight of silicone-bonded hydroxyl groups.

14. The composition of Claim 13 where there is present from 0.03 to 2 parts by weight of a polyether surfactant as a sag control additive.

15. The composition of Claim 14 wherein there is present from 5 to 30 parts by weight of silica filler and from 5 to 170 parts by weight of calcium carbonate.

16. The composition of Claim 15 wherein there is further present from 0.1 to 3 parts by weight of an adhesion promoter selected from the class consisting of silyl maleates, silyl fumerates and silyl succinates.

17. The composition of Claim 2 wherein the cross-linking agent is an alkyltrialkoxy silane and the curing catalyst is a titanium chelate.

18. The composition of Claim 17 wherein there is present from 5 to 20 parts by weight of silica filler and from 5 to 180 parts by weight of an extending filler.

19. The composition of Claim 18 wherein the extending filler is calcium carbonate.

20. The composition of Claim 18 wherein there is further present from 1 to 50 parts by weight of a plasticizer which is a triorgano silyl end-stopped diorganopolysiloxane of a viscosity varying from 50 to 10,000 centipoise at 25°C and where the organo group is a monovalent hydrocarbon radical.

21. The composition of Claim 18 wherein there is present from 0.1 to 2 parts by weight of silyl isocyanurate as an adhesion promoter.

22. The process for forming a mildew resistant room temperature silicone composition comprising (1) mixing (a) 100 parts by weight of a silanol end-stopped diorganopolysiloxane of a viscosity varying from 100 to 500,000 centipoise at 25°C where the organo group is a monovalent hydrocarbon radical; (b) from 0.01 to 15 parts by weight of a cross-linking agent; (c) from 0.01 to 10 parts by weight of a curing catalyst; and (d) and effective amount of a fungicide of the formula,

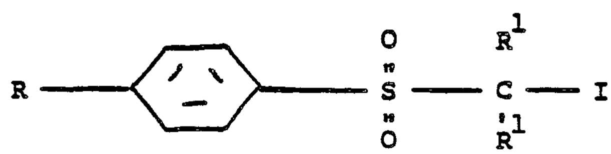

where R is selected from the class consisting of hydrogen, halogen, and alkyl materials of 1 to 4 carbon atoms and $R^1$ is selected from the class consisting of hydrogen, iodide, and alkyl radicals of 1 to 4 carbon atoms. (2) Allowing the composition to cure at room temperature.

23. The process of Claim 22 where there is present from 0.01 to 2 parts by weight of a fungicide.

24. The process of Claim 23 wherein the fungicide has the formula,

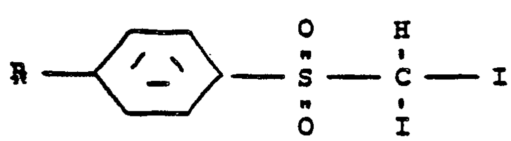

25. The process of Claim 23 wherein the fungicide has the formula,

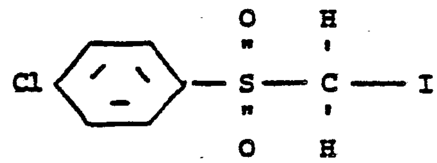

26. The process of Claim 23 werein the fungicide is added to the uncured composition as a dispersion of the fungicide and butylated hydroxy toluene.

27. The process of Claim 23 wherein the cross-linking agent has the formula,

$$R^2 Si (OCO R^3)_3$$

where $R^2$ is an alkyl radical of 1 to 8 carbon atoms where $R^3$ is an alkyl radical of 1 to 30 carbon atoms.

28. The process of Claim 27 wherein the curing catalyst is a metal salt of a carboxylic acid with the metal ranging from lead to manganese in the Periodic Table.

29. The process of Claim 28 wherein there is present from 5 to 200 parts by weight of a filler.

30. The process of Claim 29 wherein the cross-linking agent is methyltriacetoxy silane and the curing catalyst is a tin salt of a carboxylic acid.

31. The process of Claim 29 wherein the cross-linking methyl tris-(2-ethyl-hexanoxysilane.

32. The process of Claim 31 wherein the curing catalyst is dibutyl tin oxide.

33. The process of Claim 31 wherein the curing catalyst is dimethyl tin dineodecanoate.

34. The process of Claim 31 wherein in step (1) the composition has further in it from 2 to 20 parts by weight of fluid polysiloxane containing a high degree of trifunctionality, tetra functionality, on a mixture of tri- and tetrafunctionality and comprising:

(i) from 25 to 60 mole percent of monoalkyl siloxy units, siloxy units or a mixture of such units;
(ii) from 1 to 6 mole percent of trialkylsiloxy units; and
(iii) from 37 to 74 mole percent of dialkylsiloxy units, said polysiloxane containing from about 0.1 to 2 by weight of silicone-bonded hydroxyl groups.

35. The process of Claim 34 wherein there is present from .03 to 2 parts by weight of polyether surfactant as sag control additive.

36. The process of Claim 34 wherein there is further present from 5 to 30 parts by weight of silica filler and from 5 to 170 parts by weight of calcium carbonate.

37. The process of Claim 36 wherein there is further present from 0.1 to 3 parts by weight of an adhesion promoter selected from the class consisting of silyl maleates, silyl fumerates and silyl succinates.

38. The process of Claim 23 where the cross-linking agent is an alkyl trialkoxy silane and the curing catalyst is a titanium chelate.

39. The process of Claim 38 where there is present from 5 to 200 parts by weight of silica filler and from 5 to 180 parts by weight of an extending filler.

40. The process of Claim 39 where the extending filler is calcium carbonate.

41. The process of Claim 39 wherein the mixture in step (1) there is from 1 to 50 parts by weight of a plasticizer which is triorgano silyl end-stopped diorganopolysiloxane of a viscosity varying from 10 to 10,000 centipoise at 25°C and where the organo group is a monovalent hydrocarbon radical.

42. The process of Claim 39 where there is present from 0.1 to 2 parts by weight of silyl isocyanurate as an adhesion promoter.

43. A process for rendering a one component room temperature vulcanizable silicone rubber composition, mildew resistant, comprising adding to the uncured room temperature vulcanizable silicone rubber composition which is present in a substantially anhydrous state an effective amount of fungicide of the formula,

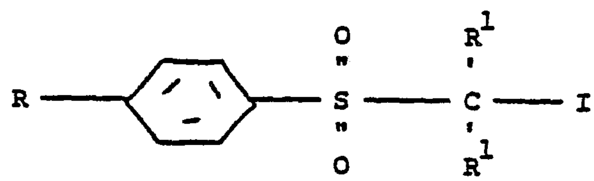

where R is selected from the class consisting of hydrogen, halogen, and alkyl materials of 1 to 4 carbon atoms and $R^1$ is selected from the class consisting of hydrogen, iodine, and alkyl radicals of 1 to 4 carbon atoms.

44. The process of Claim 43 where the room temperature vulcanizable silicone rubber composition comprises as its basic ingredients, (A) a silanol end-stopped diorganopolysiloxane polymer of a viscosity varying from 100 to 500,000 centipoise at 25°C where the organo group is a monovalent hydrocarbon radical (B) from .01 to 15 parts by weight of a cross-linking agent selected from the class consisting of methyl-triacetoxy silane, methyl-tris-(2-ethylhexanoxy silane,and methyl trimethoxysilane, and from .01 to 10 parts by weight of a curing catalyst selected from the class consisting of tin salts of carboxylic acids and titanium chelates.

45. The process of Claim 44 wherein there is further present from 5 to 200 parts by weight of a filler.

46. The process of Claim 44 wherein the fungicide is present at a concentration from 0.01 to 2 parts by weight of the fungicide based on a 100 parts of the base silanol end-stopped diorganopolysiloxane polymer.

47. The process of Claim 46 wherein the fungicide has the formula,

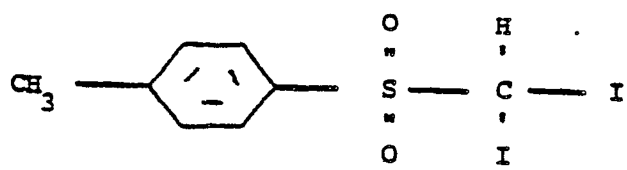

48. The process of Claim 44 wherein the fungicide has the formula,